# EUROPEAN PATENT APPLICATION

(11) **EP 1 752 756 A1**
(43) Date of publication of application: **14.02.2007**
(21) Application number: 06732322.0
(22) Date of filing: 25.04.2006
(51) Int. Cl.: G01N 13/10, G01B 21/00, G01B 21/30, G12B 21/22

(54) **SCANNING MECHANISM FOR SCANNING PROBE MICROSCOPE**

(30) Priority: 27.04.2005 JP 2005129468
(71) Applicant: Olympus Corporation, Tokyo 151-0072 (JP)
(72) Inventor: UE, Yoshihiro c/o IPS dept. OIP Serv. Co., LTD, Tokyo 192- 8512 (JP)
(74) Representative: von Hellfeld, Axel
(86) International application number: PCT/JP2006/008662
(87) International publication number: WO 2006/118118

(57) **Abstract**

A scanning mechanism for a scanning probe microscope includes an X-Y stage including a movable portion (4), an X-Y elastic member, Z elastic members (7A, 7B), and a stationary portion (5), a stationary base (1) to which the X-Y stage is fixed, an X piezoelectric element (2A) that moves the movable portion (4) in an X direction, a Y piezoelectric element that moves the movable portion (4) in a Y direction, a substrate (11) that is fixed to the upper surface of the movable portion (4), a Z piezoelectric element (3) that is fixed to the upper surface of the substrate (11) and moves a moving target in a Z direction, a cover (9) that covers most of the movable portion (4), the X actuator (2A), and the Y actuator, and a damping member (10) that is located between the cover (9) and the movable portion (4) around the Z piezoelectric element (3). The Z piezoelectric element (3) has the upper end that is positioned at a position higher than the upper surface of the cover (9).

## Description

### Technical Field

The present invention relates to a scanning mechanism for a scanning probe microscope.

### Background Art

A scanning probe microscope (SPM) is a scanning microscope that mechanically scans a mechanical probe to obtain information on a specimen surface. The scanning probe microscope includes a scanning tunneling microscope (STM), an atomic force microscope (AFM), a scanning magnetic force microscope (MFM), a scanning capacitance microscope (SCaM), a scanning near-field optical microscope (SNOM), a scanning thermal microscope (SThM), and the like. Recently, a nano-indentator, which urges a diamond probe against a specimen surface to form an impression and analyze it to check the hardness and the like of the specimen, is ranked as one SPM and popular as well as the various types of microscopes described above.

For example, a scanning probe microscope is an instrument that raster-scans a mechanical probe and a specimen in an X-Y direction relatively to obtain surface information on a desired specimen region through the mechanical probe. During X-Y scanning, it feedback-controls also in a Z direction so that the interaction of the specimen and the probe keeps constant. Different from regular movement in the X-Y direction, the Z-direction movement is irregular because it reflects the surface configuration and the surface state of the specimen. The Z-direction movement is generally regarded as Z-direction scanning movement. The Z-direction scanning is movement with the highest frequency among scanning in the X, Y, and Z directions.

A conventional scanning microscope requires several minutes to acquire one observation image due to the limitations on the scanning speed of the scanning mechanism. Recently, in the demand for high speed observation image acquisition, Jpn. Pat. Appln. KOKAI Publication No. 2004-333335 discloses a scanning mechanism that enables acquisition of several observation images within one second. In this scanning mechanism, a Z actuator used for Z scanning is fixed to a movable portion that moves for X-Y scanning. The Z actuator is a stacked piezoelectric element and has a length of about 3 to 5 [mm] and a resonance frequency of about 140 [kHz].

Jpn. Pat. Appln. KOKAI Publication No. 2004-333335 also discloses an arrangement obtained by adding a damper to suppress unwanted vibration to this scanning mechanism. More specifically, a cover having an opening through which the Z actuator is to pass is arranged above the movable portion. A damping member is located between the cover around the Z actuator and the movable portion.

### Disclosure of Invention

The acquisition speed of several images within one second is not sufficient to check the motion and the reaction of the observation target. Acquisition of several ten images per second, which is equal to or higher than the video rate, is sought for. At this time, the resonance frequency required of the Z actuator is 300 [kHz] or more, and the length of a stacked piezoelectric element that achieves this resonance frequency is 3 [mm] or less. Assume that the scanning mechanism with the damper of Jpn. Pat. Appln. KOKAI Publication No. 2004-333335 described above employs a stacked piezoelectric element having this length. Then, as the stacked piezoelectric element has a small height, it buried in the cover. Thus, it is difficult to move a cantilever close to the observation specimen.

The present invention has been made in consideration of the above situations and an object of the invention is to provide a scanning mechanism for a scanning probe microscope that enables acquisition of images at a speed equal to or higher than the video rate.

A scanning mechanism for a scanning probe microscope according to the present invention comprises a movable portion, an X actuator that moves the movable portion in an X direction, a Y actuator that moves the movable portion in a Y direction, a substrate that is fixed to an upper surface of the movable portion, and a Z actuator that moves a moving target in a Z direction, and the scanning mechanism further comprises the substrate that is fixed to the upper surface of the movable portion and has an upper surface on that the Z actuator is fixed, a cover that covers most of the movable portion, the X actuator, and the Y actuator, and a damping member that is located between the cover and the movable portion around the Z actuator, the Z actuator having an upper end that is positioned at a position higher than an upper surface of the cover.

### Brief Description of Drawings

FIG. 1 is a plan view of a scanning mechanism for a scanning probe microscope according to the first embodiment of the present invention;
FIG. 2 is a sectional view taken along the line II - II of the scanning mechanism for the scanning probe microscope of FIG. 1;
FIG. 3 is a plan view showing a structure in which a cover and a resin member are omitted;
FIG. 4 is a plan view of a scanning mechanism for a scanning probe microscope according to the second embodiment of the present invention;
FIG. 5 is a sectional view taken along the line V - V of the scanning mechanism for the scanning probe microscope of FIG. 4;
FIG. 6 is a plan view of a scanning mechanism for a scanning probe microscope according to the third embodiment of the present invention;
FIG. 7 is a sectional view taken along the line VII - VII of the scanning mechanism for the scanning probe microscope of FIG. 6;
FIG. 8 is a sectional perspective view of the substrate shown in FIG. 7;
FIG. 9 is a plan view of a scanning mechanism for a scanning probe microscope according to the fourth embodiment of the present invention;
FIG. 10 is a sectional view taken along the line X - X of the scanning mechanism for the scanning probe microscope of FIG. 9;
FIG. 11 is a plan view of a scanning mechanism for a scanning probe microscope according to the fifth embodiment of the present invention; and
FIG. 12 is a sectional view taken along the line XII - XII of the scanning mechanism for the scanning probe microscope of FIG. 11.

### Best Mode for Carrying Out the Invention

The embodiments of the present invention will be described with reference to the accompanying drawing.

### <First Embodiment>

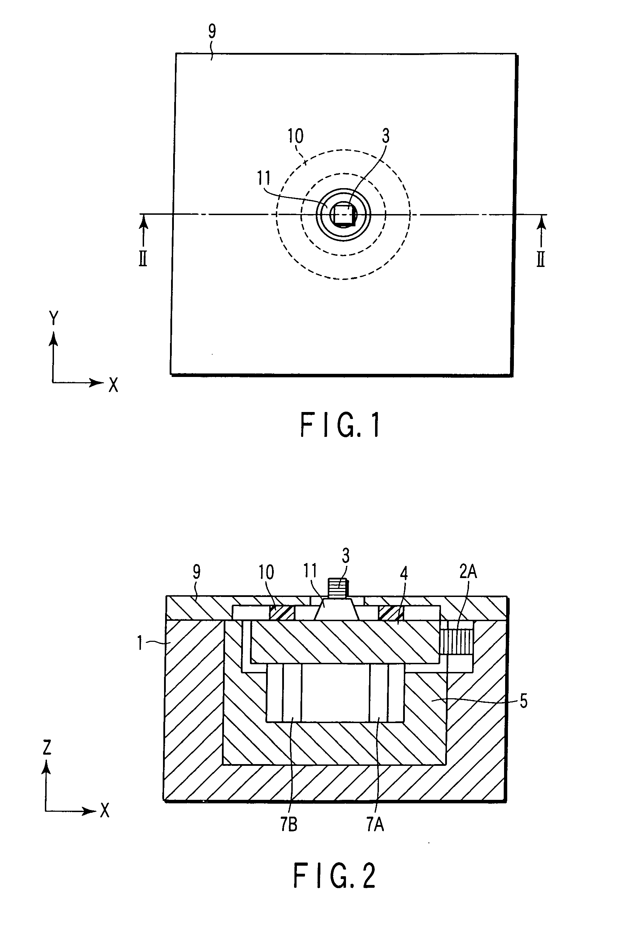

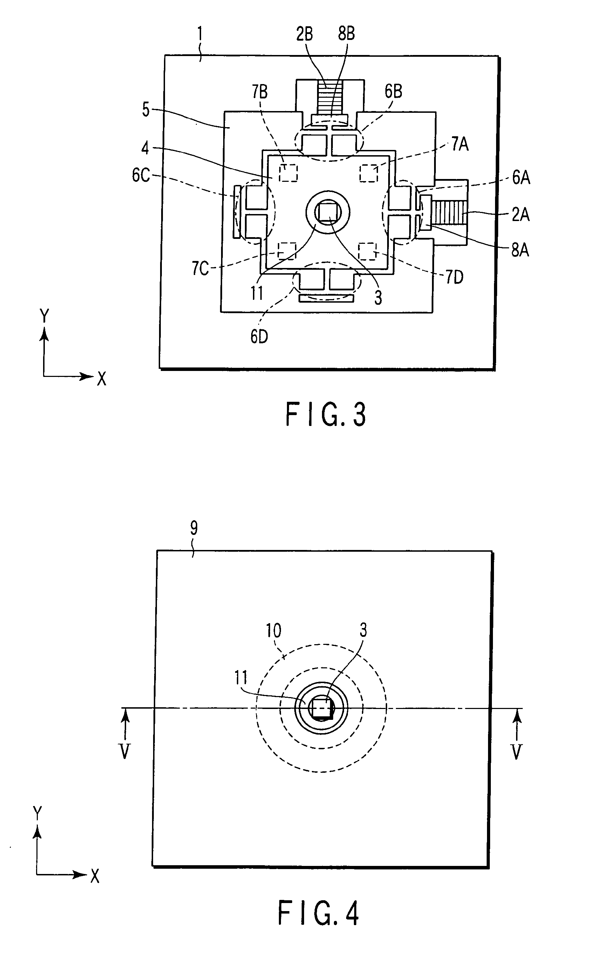

A scanning mechanism for a scanning probe mechanism according to the first embodiment will be described with reference to FIGS. 1, 2, and 3. FIG. 1 is a plan view of the scanning mechanism for the scanning probe microscope according to this embodiment, FIG. 2 is a sectional view taken along the line II - II of the scanning mechanism for the scanning probe microscope of FIG. 1, and FIG. 3 is a plan view showing a structure in which a cover and a resin member are omitted.

The scanning mechanism includes an X-Y stage having a movable portion 4, a stationary base 1 containing the X-Y stage, an X piezoelectric element 2A that is an X actuator for moving the movable portion 4 in an X direction, and a Y piezoelectric element 2B that is a Y actuator for moving the movable portion 4 in a Y direction.

The X-Y stage is fixed in the stationary base 1 by adhesion or screw fastening. The X-Y stage comprises the movable portion 4, X-Y elastic members 6A, 6B, 6C, and 6D, Z elastic members 7A, 7B, 7C, and 7D, and a stationary portion 5. The movable portion 4 is connected to the stationary portion 5 through the Z elastic members 7A to 7D. The Z elastic members 7A to 7D support the movable portion 4 with high rigidity in the Z direction. The Z elastic members 7A to 7D are arranged at positions substantially equidistant from the center of the movable portion 4. The center of gravity of the movable portion 4 is located at almost the center of the movable portion 4. The movable portion 4 is connected to the stationary portion 5 through the X-Y elastic members 6A to 6D. The X-Y elastic members 6A to 6D support the movable portion 4 with rigidity in the X-Y direction. The X-Y elastic members 6A to 6D are arranged symmetrically with respect to each of the X and Y driving axes. The X-Y elastic members 6A and 6C are located on an X-axis, and the X-Y elastic members 6B and 6D on a Y-axis. The X-Y elastic member 6A is provided with a pressing portion 8A, against which the X piezoelectric element 2A is abutted. The X-Y elastic member 6B is provided with a pressing portion 8B, against which the Y piezoelectric element 2B is abutted.

The X-Y stage is obtained by cutting from one integral component and made of a material such as aluminum. The stationary base 1, which fixes the X-Y stage, may be of the same material as the X-Y stage; but it may be preferably made of a material, e.g., stainless steel, which has a higher Young's modulus than that of aluminum.

One end of the X piezoelectric element 2A abuts against the pressing portion 8A, and the other end is fixed to the stationary base 1. The X piezoelectric element 2A is arranged so that a predetermined pilot pressure acts on it along the X-axis. The central line of the X piezoelectric element 2A extends through almost the center of gravity of the movable portion 4. One end of the Y piezoelectric element 2B abuts against the pressing portion 8B, and the other end is fixed to the stationary base 1. The Y piezoelectric element 2B is arranged so that a predetermined pilot pressure acts on it along the Y-axis. The central line of the Y piezoelectric element 2B extends through almost the center of gravity of the movable portion 4.

The scanning mechanism further includes a substrate 11 that has a predetermined thickness and is fixed to the upper surface of the movable portion 4, a Z piezoelectric element 3 that is a Z actuator for moving a moving target in the Z direction, a cover 9 that covers most of the movable portion 4, the X piezoelectric element 2A, and the Y piezoelectric element 2B, and a damping member 10 that is located between the cover 9 and the movable portion 4 around the Z piezoelectric element 3.

The cover 9 has an opening at the center and is fixed to the stationary base 1 to cover the X-Y stage. The substrate 11 has a shape of a frustum of a circular cone and is fixed to the upper surface of the movable portion 4. The substrate 11 may be integral with the movable portion 4. The Z piezoelectric element 3 is fixed to the upper surface of the substrate 11. The Z piezoelectric element 3 extends through the opening of the cover 9. The upper end of the Z piezoelectric element 3 is positioned at a position higher than the upper surface of the cover 9. The central line of the Z piezoelectric element 3 extends through almost the center of gravity of the movable portion 4. A specimen support holding the moving target object, i.e., a specimen is held on the upper end of the Z piezoelectric element 3. The damping member 10 is of a resin material, e.g., gel, having a large damping force.

The operation will be described. For example, a case of displacing the moving target in the X direction will be described. To drive the movable portion 4 in the X direction, a voltage is applied to the X piezoelectric element 2A to extend and contract it. As one end of the X piezoelectric element 2A is fixed to the stationary base 1, a displacement of the X piezoelectric element 2A displaces the pressing portion 8A abutted against the other end of the X piezoelectric element 2A. This displacement is transmitted to the X-Y elastic member 6A. Since a thin leaf spring portion of the X-Y elastic member 6A extending parallel to the X-axis has high X-direction rigidity, the displacement is transmitted to the movable portion 4. The X-Y elastic member 6C on the X-axis, which is arranged symmetrically with respect to the Y-axis, does not hinder the displacement of the movable portion 4 because a thin leaf spring portion of the X-Y elastic member 6C extending parallel to the Y-axis has low X-direction rigidity. Also, the X-Y elastic members 6B and 6D, which are arranged on the Y-axis, do not hinder the displacement of the movable portion 4 either, because thin leaf spring portions of the X-Y elastic members 6B and 6D extending parallel to the Y-axis have low X-direction rigidities. The Z elastic members 7A to 7D, which support the Z direction of the movable portion 4 with high rigidity, do not hinder the displacement of the movable portion 4 because the Z elastic members 7A to 7D have low rigidities in the X-Y direction. So, the movable portion 4 displaces in the X direction in accordance with the extension and contraction of the X piezoelectric element 2A.

When the movable portion 4 is to move in the X direction, since the X-Y elastic members 6A to 6D are arranged symmetrically with respect to the driving axes, the movable portion 4 displaces linearly in an X-Y plane without rotation. Also when the movable portion 4 is to move in the X direction, since the Z elastic members 7A to 7D, which are arranged on the lower surface of the movable portion 4, serve as parallel leaf springs, the upper surface of the movable portion 4 moves horizontally without inclination. Furthermore, since the line of driving force extending in the driving direction through the center of the piezoelectric element passes through the center of gravity of the movable portion, even when the movable portion 4 moves at high speed, the angular momentum by an inertia force does not occur readily, so that the movable portion 4 displaces highly accurately without rotation.

When the X piezoelectric element 2A displaces, a reaction force accompanying deformation of the X-Y elastic member 6A acts on the stationary base 1 at a portion that fixes the X piezoelectric element 2A. Since the stationary base 1 is made of a material having a high Young's modulus and the portion that fixes the X piezoelectric element 2A does not deform much, the displacement of the X piezoelectric element 2A is mostly transmitted to the pressing portion 8A.

This discussion concerning movement in the X direction applies to the movement in the Y direction as well.

To move the moving target in the Z direction, a voltage is applied to the Z piezoelectric element 3 to extend and contract it.

In order to actually acquire an AFM observation image, a cantilever is moved close to the observation specimen fixed to the upper end of the Z piezoelectric element 3 through the specimen support. In this case, since the upper end of the Z piezoelectric element 3 is positioned at a position higher than the upper surface of the cover 9, the cantilever can be readily moved close to the observation specimen.

Even if unwanted vibration occurs in the movable portion 4, the damping member 10 having large damping force quickly attenuates it.

As the substrate 11 has a shape of a frustum of a circular cone, it has equally high rigidities against external forces and inertia forces in any directions that occur within the X-Y plane. Even when the movable portion 4 scans at high speed in either the X or Y direction to generate large inertia force, the Z piezoelectric element 3 moves to follow the movement of the movable portion 4 well without inclination.

### <Second Embodiment>

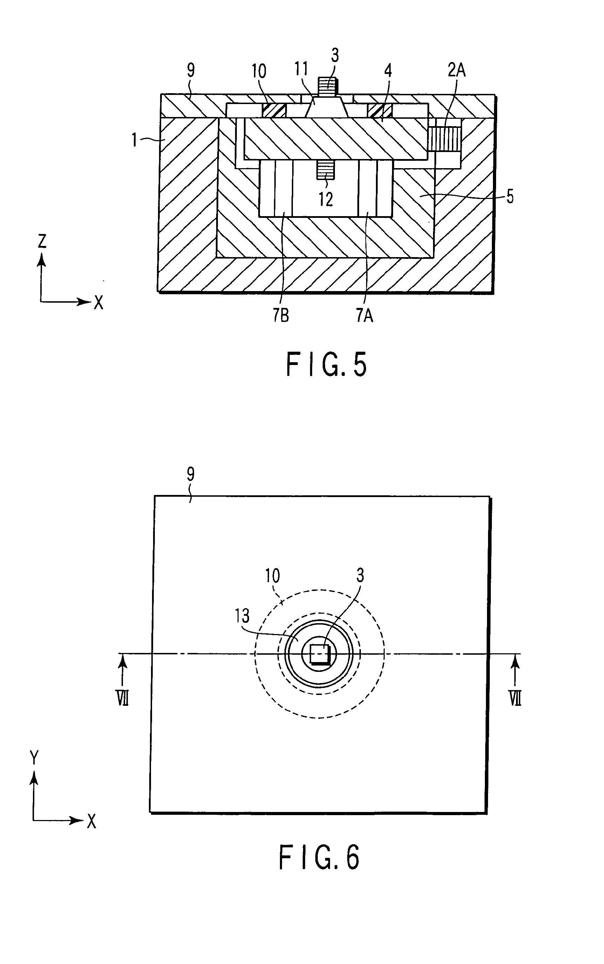

A scanning mechanism for a scanning probe microscope according to the second embodiment will be described with reference to FIGS. 4 and 5. FIG. 4 is a plan view of the scanning mechanism for the scanning probe microscope according to this embodiment, and FIG. 5 is a sectional view taken along the line V - V of the scanning mechanism for the scanning probe microscope of FIG. 4. In FIGS. 4 and 5, members that are denoted by the same reference numerals as those of the members shown in FIGS. 1 to 3 are identical members, and a detailed description thereof will be omitted. A description will be made hereinafter with an emphasis on the difference from the first embodiment.

The scanning mechanism for the scanning probe microscope according to this embodiment further includes a piezoelectric element 12 that is a vibration damping actuator that suppresses generation of vibration in addition to the arrangement of the scanning mechanism for the scanning probe microscope of the first embodiment. The piezoelectric element 12 has a structure identical to a Z piezoelectric element 3 and is fixed to the lower surface of a movable portion 4. The central line of the piezoelectric element 12 extends through almost the center of gravity of the movable portion 4.

In order to move a moving target in a Z direction, a voltage is applied to the Z piezoelectric element 3 and, simultaneously, the same voltage is applied to the piezoelectric element 12. Inertia force generated when the Z piezoelectric element 3 and the piezoelectric element 12 displace is to vibrate the movable portion 4. Since the inertia force generated by the piezoelectric element 12 has a direction opposite to that of the inertia force generated by the Z piezoelectric element 3 and has almost the same magnitude, the inertia forces cancel each other, so that the movable portion 4 does not vibrate. As a result, a clear observation image can be obtained without being adversely affected by the vibration.

### <Third Embodiment>

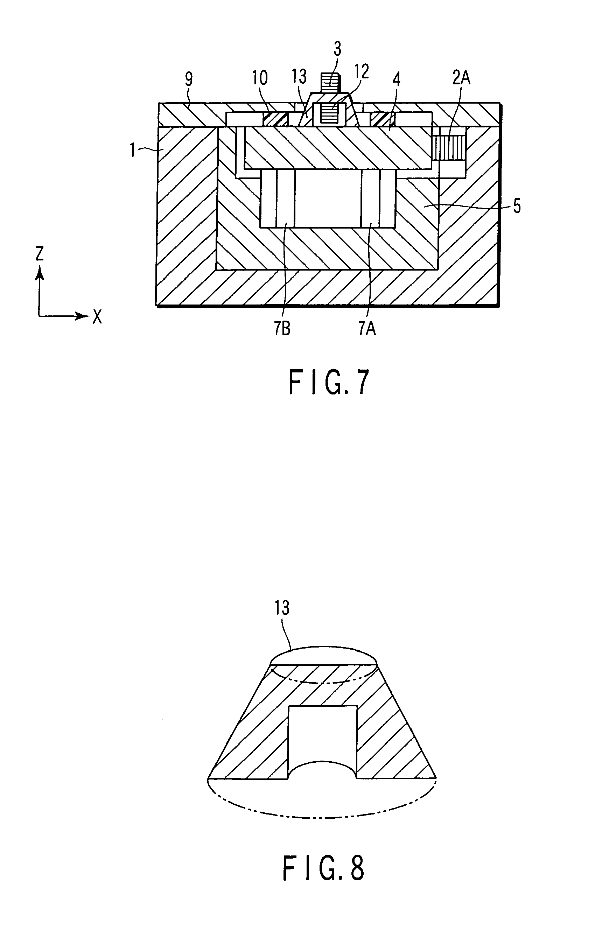

A scanning mechanism for a scanning probe microscope according to the third embodiment will be described with reference to FIGS. 6, 7, and 8. FIG. 6 is a plan view of the scanning mechanism for the scanning probe microscope according to this embodiment, FIG. 7 is a sectional view taken along the line VII - VII of the scanning mechanism for the scanning probe microscope of FIG. 6, and FIG. 8 is a sectional perspective view of the substrate shown in FIG. 7. In FIGS. 6 to 8, members that are denoted by the same reference numerals as those of the members shown in FIGS. 1 to 3 are identical members, and a detailed description thereof will be omitted. A description will be made hereinafter with an emphasis on the difference from the first embodiment.

The scanning mechanism for the scanning probe microscope according to this embodiment further includes a piezoelectric element 12 that is a vibration damping actuator that suppresses generation of vibration in addition to the arrangement of the scanning mechanism for the scanning probe microscope of the first embodiment, and includes a substrate 13 in place of the substrate 11. The substrate 13 has a shape of a frustum of a circular cone and a hollow portion. The hollow portion comprises a cylindrical recess formed in the bottom surface of the frustum of a circular cone. The piezoelectric element 12 is fixed to the ceiling surface of the hollow portion of the substrate 13. Hence, the piezoelectric element 12 is contained in the hollow portion of the substrate 13 and not exposed outside. The piezoelectric element 12 is a structure identical to a Z piezoelectric element 3. The central line of the piezoelectric element 12 extends through substantially the center of gravity of a movable portion 4.

As the substrate 13 has a shape of a frustum of a circular cone, it has equally high rigidities against external forces and inertia forces in all directions within an X-Y plane. Even when the movable portion 4 scans at high speed in either the X or Y direction to generate large inertia force, the Z piezoelectric element 3 moves to follow the movement of the movable portion 4 well without inclination.

In order to move a moving target in a Z direction, a voltage is applied to the Z piezoelectric element 3 and, simultaneously, the same voltage is applied to the piezoelectric element 12. Inertia force generated when the Z piezoelectric element 3 and the piezoelectric element 12 displace is to vibrate the movable portion 4. Since the inertia force generated by the piezoelectric element 12 has a direction opposite to that of the inertia force generated by the Z piezoelectric element 3 and has almost the same magnitude, the inertia forces cancel each other, so that the movable portion 4 does not vibrate. As a result, a clear observation image can be obtained without being adversely influenced by the vibration.

### <Fourth Embodiment>

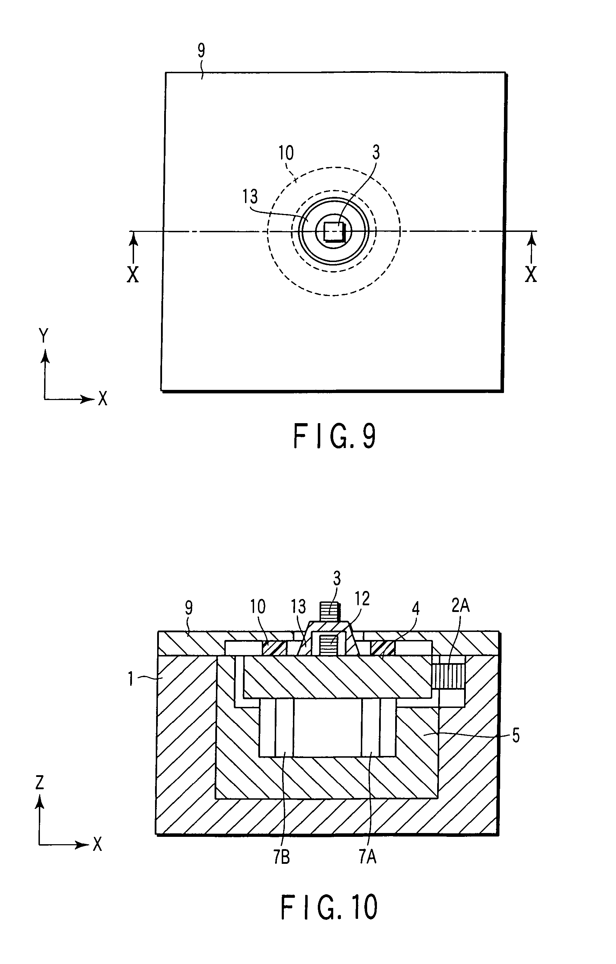

A scanning mechanism for a scanning probe microscope according to the fourth embodiment will be described with reference to FIGS. 9 and 10. FIG. 9 is a plan view of the scanning mechanism for the scanning probe microscope according to this embodiment, and FIG. 10 is a sectional view taken along the line X - X of the scanning mechanism for the scanning probe microscope of FIG. 9. In FIGS. 9 and 10, members that are denoted by the same reference numerals as those of the members shown in FIGS. 1 to 3 are identical members, and a detailed description thereof will be omitted. A description will be made hereinafter with an emphasis on the difference from the first embodiment.

The scanning mechanism for the scanning probe microscope according to this embodiment further includes a piezoelectric element 12 that is a vibration damping actuator that suppresses generation of vibration in addition to the arrangement of the scanning mechanism for the scanning probe microscope of the first embodiment, and includes a substrate 13 in place of the substrate 11. The substrate 13 has a shape of a frustum of a circular cone and a hollow portion. The hollow portion comprises a cylindrical recess formed in the bottom surface of the frustum of a circular cone. The piezoelectric element 12 is fixed to the upper surface of a movable portion 4. Hence, the piezoelectric element 12 is contained in the hollow portion of the substrate 13 and not exposed outside. The piezoelectric element 12 is a structure identical to a Z piezoelectric element 3. The central line of the piezoelectric element 12 extends through substantially the center of gravity of the movable portion 4.

As the substrate 13 has a shape of a frustum of a circular cone, it has equally high rigidities against external forces and inertia forces in all directions within an X-Y plane. Even when the movable portion 4 scans at high speed in either the X or Y direction to generate large inertia force, the Z piezoelectric element 3 moves to follow the movement of the movable portion 4 well without inclination.

In order to move a moving target in a Z direction, a voltage is applied to the Z piezoelectric element 3 and, simultaneously, a voltage having the same magnitude and an opposite phase to those of the voltage to the Z piezoelectric element 3 is applied to the piezoelectric element 12. Inertia force generated when the Z piezoelectric element 3 and the piezoelectric element 12 displace is to vibrate the movable portion 4. Since the inertia force generated by the piezoelectric element 12 has a direction opposite to that of the inertia force generated by the Z piezoelectric element 3 and has almost the same magnitude, the inertia forces cancel each other, so that the movable portion 4 does not vibrate. As a result, a clear observation image can be obtained without being adversely influenced by the vibration.

### <Fifth Embodiment>

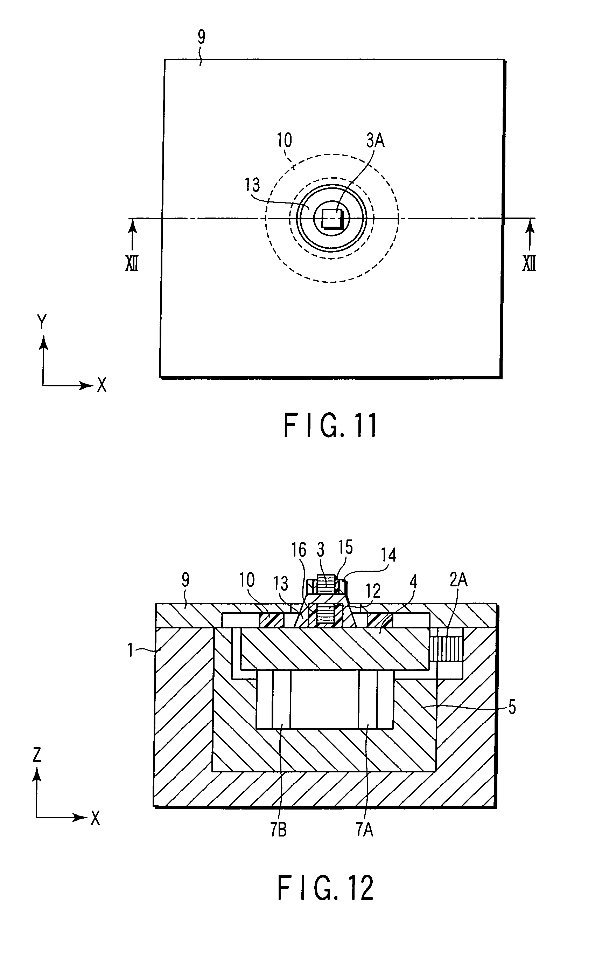

A scanning mechanism for a scanning probe microscope according to the fifth embodiment will be described with reference to FIGS. 11 and 12. FIG. 11 is a plan view of the scanning mechanism for the scanning probe microscope according to this embodiment, and FIG. 12 is a sectional view taken along the line XII - XII of the scanning mechanism for the scanning probe microscope of FIG. 11. In FIGS. 11 and 12, members that are denoted by the same reference numerals as those of the members shown in FIGS. 6 to 8 of the third embodiment are identical members, and a detailed description thereof will be omitted. A description will be made hereinafter with an emphasis on the difference from the third embodiment.

The scanning mechanism for the scanning probe microscope according to this embodiment further includes a cylindrical member 14 that surrounds a Z piezoelectric element 3, a filler 15 that fills the gap between the Z piezoelectric element 3 and the cylindrical member 14, and a filler 16 that fills the gap between a piezoelectric element 12 and a substrate 13 in addition to the arrangement of the scanning mechanism for the scanning probe microscope of the third embodiment. For example, the fillers 15 and 16 are of a resin such as silicone, although they are not limited to this.

Even when the observation specimen is a living specimen and a liquid is to be used, a liquid drop will not attach to the Z piezoelectric element 3 and the piezoelectric element 12. Thus, the characteristics of the Z piezoelectric element 3 and the piezoelectric element 12 will not degrade. Since the resin such as silicone has a large vibration attenuating effect, even if the Z piezoelectric element 3 and the piezoelectric element 12 resonate, the resin such as silicone attenuates the vibration quickly.

So far the embodiments of the present invention have been described with reference to the drawings. Note that the present invention is not limited to these embodiments. Various changes and modifications may be made without departing from the spirit of the invention.

### Industrial Applicability

The present invention provides a scanning mechanism for a scanning probe microscope that enables acquisition of images at a speed equal to or higher than the video rate.

## Claims

1. A scanning mechanism for a scanning probe microscope, comprising
a movable portion (4),
an X actuator (2A) that moves the movable portion (4) in an X direction,
a Y actuator (2B) that moves the movable portion (4) in a Y direction, and
a Z actuator (3) that moves a moving target in a Z direction,
**characterized by** further comprising
a substrate (11; 13) that is fixed on an upper surface of the movable portion (4) and has an upper surface on which the Z piezoelectric element (3) is fixed,
a cover (9) that covers most of the movable portion (4), the X actuator (2A), and the Y actuator (2B), and
a damping member (10) that is located between the cover (9) and the movable portion (4) around the Z piezoelectric element (3), the Z piezoelectric element (3) having an upper end that is positioned at a position higher than an upper surface of the cover (9).

2. A scanning mechanism for a scanning probe microscope according to claim 1, **characterized by** further comprising a vibration damping actuator (12) that suppresses generation of vibration.

3. A scanning mechanism for a scanning probe microscope according to claim 2, **characterized in that** the vibration damping actuator (12) is fixed to a lower surface of the movable portion (4).

4. A scanning mechanism for a scanning probe microscope according to claim 2, **characterized in that** the substrate (13) includes a hollow portion, and the vibration damping actuator (12) is contained in the hollow portion of the substrate (13).

5. A scanning mechanism for a scanning probe microscope according to claim 4, **characterized in that** the vibration damping actuator (12) is fixed to the movable portion (4).

6. A scanning mechanism for a scanning probe microscope according to claim 4, **characterized in that** the vibration damping actuator (12) is fixed to the substrate (13).

7. A scanning mechanism for a scanning probe microscope according to claim 4, **characterized by** further comprising a cylindrical member (14) that surrounds the Z actuator (3), a filler (15) that fills a gap between the Z actuator (3) and the cylindrical member (14), and a filler (16) that fills a gap between the vibration damping actuator (12) and the substrate (13).
